Europäisches Patentamt

European Patent Office

Office européen des brevets

(11) Publication number: **0 263 686 B1**

# EUROPEAN PATENT SPECIFICATION

(45) Date of publication of patent specification: **15.12.93**

(51) Int. Cl.⁵: **C08F 246/00**, C08F 222/14, C09J 4/02, C09J 7/02, C08F 220/18

(21) Application number: **87308870.2**

(22) Date of filing: **07.10.87**

The file contains technical information submitted after the application was filed and not included in this specification

(54) Energy-curable pressure-sensitive adhesives and process for producing pressure-sensitive adhesive stock.

(30) Priority: **08.10.86 US 916717**

(43) Date of publication of application: **13.04.88 Bulletin 88/15**

(45) Publication of the grant of the patent: **15.12.93 Bulletin 93/50**

(84) Designated Contracting States: **BE CH DE FR GB LI NL**

(56) References cited:
**EP-A- 0 252 717**
**WO-A-85/00821**

(73) Proprietor: **AVERY DENNISON CORPORATION 150 North Orange Grove Boulevard, P.O. Box 7090 Pasadena, CA 91109(US)**

(72) Inventor: **Bordoloi, Binoy K. 22710 8th Street, No. 204C Newhall California 91321(US)**
Inventor: **Ozari, Yehuda 1754 Orangewood Lane Arcadia California 91006(US)**
Inventor: **Plamthottam, Sebastian S. 280 East Del Mar Boulevard Pasadena California 91101(US)**
Inventor: **Van Ham, Robert 605 Cornell Drive Arcadia California 91006(US)**

(74) Representative: **Harvey, David Gareth et al Graham Watt & Co. Riverhead Sevenoaks Kent TN13 2BN (GB)**

**Description**

The present invention relates to energy-curable pressure-sensitive adhesives and process for producing pressure-sensitive adhesive stock.

More particularly, this invention is directed to curing by radiation, particularly electron-beam (EB) radiation, of pressure-sensitive, acrylic-based interpolymers containing an interpolymerized amount of tackifier monomers, as defined herein.

U.S.-A-2,544,692 discloses copolymerization of an acrylic acid with minor amounts of a fumarate diester. Emulsion and bulk polymerization are stated as being feasible. A pressure-sensitive-adhesive product is disclosed.

U.S.-A-2,642,414 discloses copolymers of esters of methacrylic acid, a saturated aliphatic monohydric alcohol, a maleinoid ester of a saturated aliphatic monohydric alcohol of from 4 to 14 carbon atoms, and certain organic acids. The maleinoid esters include dibutyl fumarate. The products of the reaction are disclosed to have utility in modifying the pour point of hydrocarbon oils.

U.S.-A-4,220,744 discloses the use of two-stage bulk polymerization to form a viscous liquid containing interpolymerized amounts of dialkyl esters of fumaric or maleic acid.

The curing of monomers as well as polymers to induce or improve pressure-sensitive properties is old in the art. Of relevance to the overall concept is U.S.-A-3,725,115. This patent discloses the preparation of pressure-sensitive adhesives by irradiating a hot-melt composition. The compositions disclosed are coated on release liners and subjected to electron-beam radiation of a dosage of from 6 to 8 megarad (60 to 80 kiloGray), leading to high peel strengths. The improved adhesive is then transferred to the face stock.

U.S.-A-4,069,123 discloses the UV curing of homopolymers of alkyl esters of acrylic and methacrylic acids and of copolymers of such monomers with other comonomers, including $C_1$-$C_4$ alkyl half-esters of maleic and fumaric acids. The polymers are disclosed as being formed by bulk, solvent or emulsion polymerization.

It has not been heretofore known to use $C_1$-$C_3$ lower alkyl diesters of unsaturated dicarboxylic acids in combination with energy curing, to enhance adhesive properties. This, in part, is the subject matter of the present invention.

The present invention is now set out in the following description which is given by way of example only.

According to the present invention there are provided hot-melt-coatable, radiation-curable acrylic polymers produced by interpolymerization of at least one first monomer having a glass-transition temperature (Tg) less than -25°C and an entanglement molecular-weight (Me) greater than 20,000; at least one second monomer having a glass-transition temperature greater than -25°C and an entanglement molecular-weight less than 20,000; and at least one tackifier monomer having a glass-transition temperature greater than -25°C and an entanglement molecular-weight greater than 20,000, the tackifier monomer being present in an amount of up to 30% by weight, preferably 5 to 30% by weight, of the total monomers present to provide a polymer having an entanglement molecular-weight greater than 20,000 and a glass-transition temperature less than -25°C. It is preferred that the tackifier monomer be an alkyl diester of an unsaturated dicarboxylic acid containing 4 carbon atoms in which each alkyl group independently contains from 1 to 3 carbon atoms. Isomeric alkyl acrylates and alkyl methacrylates may also be used as tackifier monomers.

The acrylic polymers of the present invention are radiation-curable. Electron-beam curing is presently preferred. Even though formed by bulk polymerization, the acrylic polymers exhibit properties which enable replacement of solvent-formed, acrylic pressure-sensitive adhesives. As indicated, the polymers produced in accordance with the present invention are controlled as to molecular properties by the tackifier monomer selected, in combination with the balance of the total monomer composition.

The copolymers provided in accordance with the present invention comprise from 55% to 90% by weight based on the total weight of the monomers, of a first monomer having a glass-transition temperature less than -25°C and an entanglement molecular-weight greater than 20,000; and up to 30% by weight, preferably from 5% to 30% by weight, based on the weight of total monomers, of at least one tackifier monomer; the balance comprising a second monomer having a glass-transition temperature greater than -25°C and an entanglement molecular-weight less than 20,000. The preferred second monomers are unsaturated carboxylic acids, preferably acrylic acid. The preferred first monomers are alkyl acrylates, preferably 2-ethylhexyl acrylate and/or butyl acrylate. The presently preferred tackifier monomer is diethyl fumarate.

Products are formed by directly or indirectly casting onto a face material, the adhesive as disclosed herein, preferably one including a multifunctional monomer as defined herein. The hot-melt application is preferred. Application from a solvent is also feasible. The cast adhesive is cured by radiation, preferably EB

2

EP 0 263 686 B1

radiation. For EB radiation, the multifunctional monomer reduces the energy required to improve adhesive properties, and in any event will be used in an amount up to 200 kiloGray (kGy), preferably up to 100 kiloGray.

Also according to the present invention, there is provided a process for the production of a pressure-sensitive adhesive stock, which process comprises:

a) providing onto a substrate selected from a face material and a surface capable of transferring an adhesive layer to a face material, a coating of a pressure-sensitive adhesive (e.g a hot melt adhesive) comprised of an interpolymer formed of:

at least one first monomer having a glass-transition temperature less than -25°C and an entanglement molecular-weight greater than 20,000 and present in an amount of from 55% to 90% by weight based on the total weight of the monomers;

at least one second monomer having a glass-transition temperature greater than -25°C and an entanglement molecular-weight less than 20,000, said second monomer being present in an amount of up to 25% by weight based on the total weight of the monomers; and

at least one tackifier monomer having a glass-transition temperature greater -25°C and an entanglement molecular-weight of at least 20,000, said tackifier monomer being present in an amount of up to 30% by weight, preferably 5 to 30% by weight, of the total monomers present to provide a hot-melt adhesive having a glass-transition temperature less than -25°C and an entanglement molecular-weight greater than 20,000; and

b) subjecting the pressure-sensitive-adhesive layer to the action of radiation-energy crosslinking, to cause an increase in shear strength of the interpolymer.

Preferred embodiments of the invention will now be described in more detail by way of example only with reference to the accompanying drawings, in which:

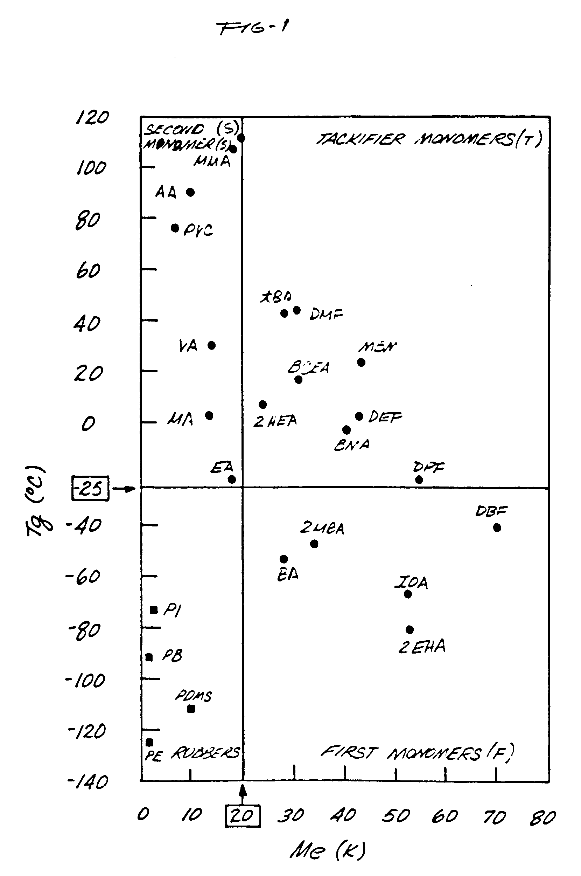

FIG. 1 is a diagram of glass transiton temperature versus entanglement molecular-weight and graphically illustrates the regions occupied by the tackifier monomer(s), first monomers, second monomers, and rubber-forming polymers when amorphous, wherein:

| PI | = | Polyisoprene |
| PB | = | Polybutadiene |
| PDMS | = | Polydimethyl Siloxane |
| PE | = | Polyethylene |
| S | = | Styrene |
| MMA | = | Methyl Methacrylate |
| AA | = | Acrylic Acid |
| VA | = | Vinyl Acetate |
| MA | = | Methyl Acrylate |
| EA | = | Ethyl Acrylate |
| BA | = | Butyl Acrylate |
| 2-MBA | = | 2-Methyl Butyl Acrylate |
| 2-EHA | = | 2-Ethyl Hexyl Acrylate |
| DBF | = | Dibutyl Fumarate |
| t-BA | = | t-Butyl Acrylate |
| MBM | = | Mono-Butyl Maleate |
| $\beta$-CEA | = | $\beta$-Carboxy Ethyl Acrylate |
| 2-HEA | = | 2-Hydroxy Ethyl Acrylate |
| BMA | = | Butyl Methacrylate |
| DMF | = | Dimethyl Fumarate |
| DEF | = | Diethyl Fumarate |
| DPF | = | Dipropyl Fumarate |

FIG. 2 shows the region in which a pressure-sensitive adhesive can be formulated using a first monomer, a second monomer, and a tackifier monomer in accordance with the present invention.

FIGS. 3 and 4, respectively, show 180° peel and loop tack in Newtons per meter, as well as 70°C shear and room-temperature shear at 500g load and 1.27cm x 1.27cm overlap, in kiloseconds, for a pressure-sensitive adhesive provided in accordance with the present invention and containing 12 mole % diethyl fumarate, 78 mole % butyl acrylate, 10 mole % acrylic acid, and 2% by weight pentaerythritol triacrylate (PETA) at various dosage levels in kiloGray (kGy). Such an adhesive is applied to a facestock at a coating weight of about 47 g/m$^2$.

FIGS. 5 and 6 compare the properties of the EB-cured composition, with and without the use of PETA (2%), for a polymer of the same monomer composition but differing in molecular properties (e.g.

3

molecular weight). Coating weight is about 36 g/m$^2$.

The present invention is directed to the use of uncommon tackifier monomers to provide radiation-curable, preferably electron-beam-curable, acrylic pressure-sensitive adhesives in which a tackifier monomer is effectively used to control the glass-transition temperature and entanglement molecular-weight of the polymer produced. The polymers formed in accordance with the present invention are preferably prepared by bulk polymerization and are typically applied as hot-melt adhesives, although solvent-casting techniques may also be used. Certain adhesive properties, such as high-temperature shear, are enhanced by radiation curing, preferably electron-beam (EB) curing, the necessary level of which is reduced by the presence of a multifunctional monomer.

The polymers formed in accordance with the present invention comprise, in addition to the tackifier monomer, at least one first monomer having a glass-transition temperature less than -25°C and an entanglement molecular-weight greater than 20,000, and at least one second monomer having glass-transition temperature greater than -25°C and an entanglement molecular-weight less than 20,000. The combination provides greater latitude as to polymer properties, as compared with two-component monomer systems.

"Entanglement molecular-weight" as used herein is defined in Viscoelastic Properties of Polymers, 3rd Ed., John Ferry, John Wiley and Sons, 1981, incorporated herein by reference, and can be calculated using the formula:

$$M_e = 5.4 \times 10^4 \frac{\Sigma M}{\Sigma N} \left[ \frac{\Sigma V}{\Sigma N} - 1.48 \times 10^{-5} \right]^{1/2}$$

where:

M = molar weight of group

N = number of main chain carbon atoms per group

V = group contribution to molar volume

The formula, M, N, and V are explained and supported in detail in Computer Aided Design of Polymers and Composites, D. Kaeble, Marcel Dekker, Inc., 1985, pgs. 116 to 121.

By "tackifier monomer" there is meant herein a monomer which, if homopolymerizable, would polymerize to a polymer which does not have pressure-sensitive adhesive properties and which has a glass-transition temperature greater than -25°C and an entanglement molecular-weight greater than 20,000. The monomers include lower alkyl diesters of unsaturated dicarboxylic acids in which the alkyl group contains up to 3 carbon atoms, acrylic acid esters of branched alcanols (e.g. t-butyl acrylate), and lower alkyl methacrylates (e.g. butyl methacrylate).

The tackifier monomer is provided in an amount determined by the physical properties of the desired hot-melt, pressure-sensitive adhesives, typically in an amount of up to 30% by weight, preferably from 5% to 30% by weight, based on the total weight of the monomers.

Diesters of unsaturated dicarboxylic acids useful as tackifier monomers are those in which the unsaturated carboxylic-acid-group contains 4 carbon atoms and in which each alkyl-diester group independently contains from 1 to 3 carbon atoms. Diesters of fumaric acid are preferred, with diethyl fumarate being most preferred. Also useful are acrylates such as tert-butyl acrylate, isopropyl acrylate and the like, and methacrylates such as normal or tert-butyl methacrylates and the like.

Various functional monomers such as hydroxy ethyl acrylate, beta-carboxy ethyl acrylate, fumaric acid, itaconic acid and the like, may also be included.

"First monomers" as used herein are monomers having a glass-transition temperature less than -25°C and an entanglement molecular-weight of greater than 20,000. Included are butyl acrylate, 2-methylbutyl acrylate, 2-ethylhexyl acrylate and the like, as well as the higher alkyl esters of unsaturated dicarboxylic acids containing 4 carbon atoms, such as dibutyl fumarate and the like. Butyl acrylate and/or 2-ethylhexyl acrylate are preferred. Their concentration is from 55% to 90% by weight, based on the total weight of the monomers.

"Second monomers" as used herein are monomers which have a glass-transition temperature greater than -25°C and an entanglement molecular-weight of less than 20,000, and include, among others, some alkyl methacrylates such as methyl methacrylate; copolymerizable vinyl unsaturated monomers such as vinyl acetate; styrenic monomers such as styrene and the like; and unsaturated carboxylic acids such as acrylic acid and methacrylic acid. Acrylic acid is preferred, and is normally present in an amount of from 1% by weight to 15% by weight or less, based on the total weight of the monomers.

4

The radiation-curable, hot-melt, pressure-sensitive polymers prepared in accordance with the present invention, in order to be useful as pressure-sensitive adhesives, must have a net effective glass-transition temperature of from about 30°C to 70°C below the use-temperature. For purposes of the instant invention, for the adhesive to be pressure-sensitive at ambient temperature (about 25°C), the criterion is that the polymers must have a glass-transition temperature of less than about -25°C, and the additional criterion is that the entanglement molecular-weight be greater than 20,000.

Fig. 1 shows some of the tackifier monomers, first monomers, and second monomers in the regions in which they fall relative to each other. The lower-left-hand quadrant shows zones occupied by monomers which normally lead to the formation of amorphous rubbers, and as such are not included in the invention.

As the polymers produced in accordance with the instant invention are radiation-curable by any suitable means, EB curing is preferably used to improve adhesive properties, particularly shear. The dosage levels for EB curing may be up to about 200 kiloGray (kGy), preferably up to about 100 kGy, and are materially reduced by inclusion of a multifunctional monomer. For EB cure, weight-average molecular-weight should be at least about 100,000. Ultraviolet radiation and gamma radiation may also be used, but are more costly and therefore less desired than EB curing.

"Multifunctional monomers" as used herein means monomers having 2 or more pendant acrylate or methacrylate groups which enable crosslinking of the cast adhesive coating in the production of pressure-sensitive adhesive stock, tapes, labels and the like. Illustrative monomers include pentaerythritol triacrylate (PETA), triethyleneglycol diacrylate, triethyleneglycol dimethacrylate, trimethylol propane trimethacrylate, trimethylol propane triacrylate, tripropyleneglycol diacrylate, tripropyleneglycol dimethacrylate, 1,3-butyleneglycol dimethacrylate, tetraethyleneglycol dimethacrylate and the like. The concentration of multifunctional monomer may be up to 8% by weight, more preferably from 1% to 5% by weight, based on the total weight of the monomers of the hot-melt adhesive. Its inclusion enables the lowering of the energy dosage required to improve shear, particularly elevated-temperature shear.

In production, the curable polymer is hot-melt-coated directly onto the facestock, or onto a transfer surface then applied to the facestock. The latter is preferred where uniformity of the adhesive coat is desired. EB-cure is then utilized to raise shear.

The presently preferred compositions of the instant invention contain, on an interpolymerized basis, from 5% to 30% by weight diethyl fumarate; from 55% to 95% by weight butyl acrylate; and from 2% to 20% by weight acrylic acid, and include multifunctional monomers to reduce the energy required to induce crosslinking by EB radiation.

Radiation-curable, preferably EB-curable, acrylic polymers may be produced in accordance with the present invention, by bulk and solvent polymerization using a free radical catalyst. Bulk polymerization is preferred for economy.

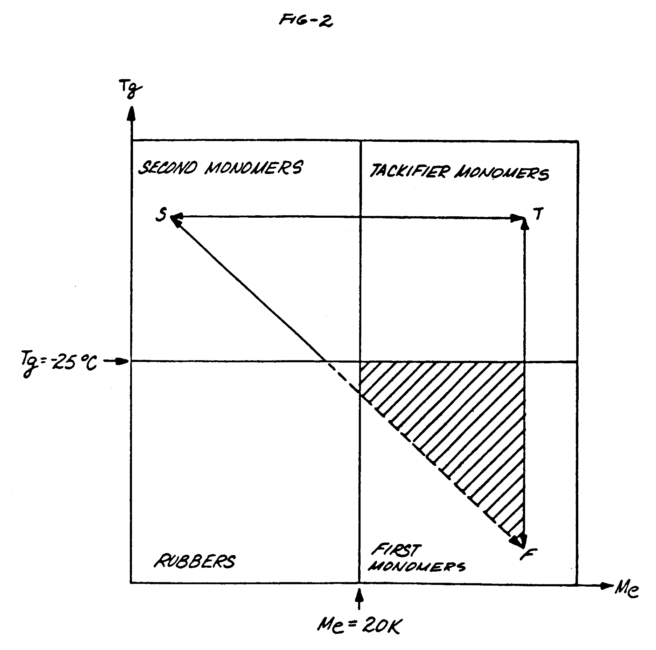

With reference now to Fig. 2, there is shown a system for a first monomer (F), a second monomer (S), and a tackifier monomer (T). If only the first and second monomers were employed, the resultant polymers would have properties limited by the line F-S. By adding the third component T, there is created the shaded region of polymer properties, rather than the line F-S. Accordingly, the ability to control the glass-transition temperature and entanglement molecular-weight became flexible, which controllability remained unchanged during EB curing. In general, increase of the glass-transition temperature, in the shaded region, at constant entanglement molecular-weight results in an increase in shear, while an increase in entanglement molecular-weight in that region at constant glass-transition temperature results in a higher tack and lower shear, for a constant molecular-weight of the polymer produced. The addition of more components or functional monomers to the system will create quadrinary or higher points defining different zones within the shaded regions of pressure-sensitive adhesives.

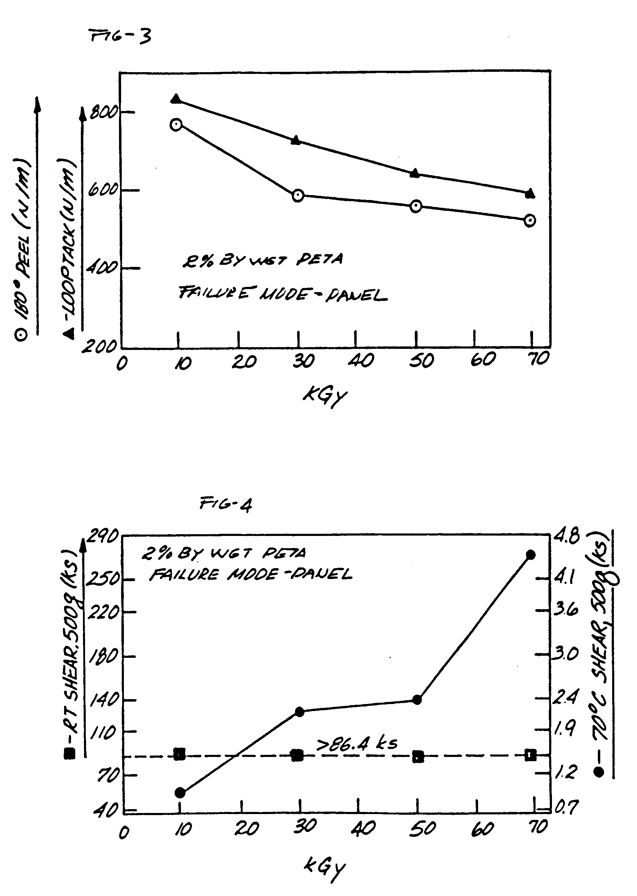

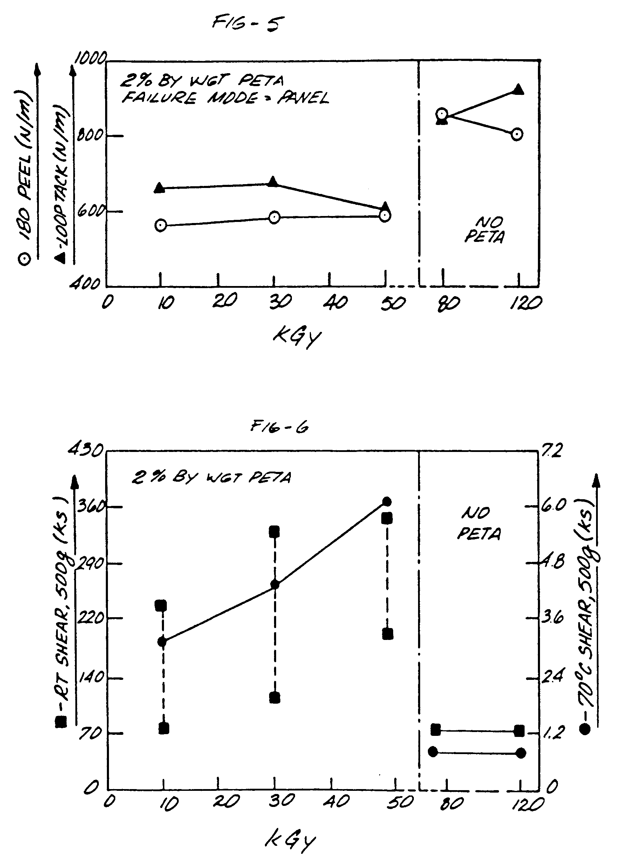

Figs. 3, 4, 5 and 6 show the effect of the use of a multifunctional monomer as the crosslinking aid to EB curing for the system 12 mole-percent diethyl fumarate, 78 mole-percent butyl acrylate, and 10 mole-percent acrylic acid. The polymer of Figs. 3 and 4 had a weight-average molecular-weight (Mw) of 267,000 and a ratio of weight-average molecular-weight (Mw) to number-average molecular-weight (Mn) of 24.9. As for Figs. 5 and 6, Mw was 266,000, and Mw/Mn was 11.1. EB curing and use of a multifunctional monomer as a crosslinking agent tended to reduce peel but increase shear. With reference to Fig. 4, room-temperature (RT) shear was greater than 24 hours for all dosages of EB cure. Figs. 5 and 6 also show the effect of non-use of a multifunctional monomer, i.e., even at higher dosage levels there was higher peel and tack but lower shear, compared to the use of a multi-functional monomer. The range of room-temperature shear for a given EB dosage with PETA addition is also shown in FIG. 6. The following Examples and Controls further illustrate the present invention. Viscosity (n) is always before cure.

Example 1 and Control I

There were formed by bulk polymerization, hot-melt adhesives based on diethyl fumarate and dibutyl fumarate. In each instance, the first monomer was butyl acrylate and the second monomer was acrylic acid. Table I shows peel-tack-shear performance after curing of the adhesive (Ex. 1) with 50 kGy for a system containing 2% by weight PETA, following application of the adhesive mixture at a coating level of 50 g/m$^2$ onto a release liner at 150°C, then laminating the coated release liner to a face material of 2 mil (0.05 mm) Mylar. A polymer system containing dibutyl fumarate was used as Control I. The substrate was stainless steel. As can be seen with almost equivalent concentrations of monomers, the diethyl fumarate provides an adhesive of improved properties, compared to dibutyl fumarate, at comparable melt viscosities.

## Table I

| Ct. Wt. = 50 g/m$^2$ Mylar/SS | | | 180° Peel (N/m) | Loop Tack (N/m) | 70°C Shear 500g (ks) | Visc. 150°C/ 2 sec$^{-1}$ (Pa·s) |
|---|---|---|---|---|---|---|
| **% by Weight Monomer** | | | | | | |
| DEF | BA | AA | | | | |
| 15.7 | 78.8 | 5.5 | 558p | 640p | 2.3 ps | 40 |
| DBF | BA | AA | | | | |
| 17.5 | 77.5 | 5.0 | 451f/c | 584p | 0.6 ps | 54 |

| | | | | | | |
|---|---|---|---|---|---|---|
| p | = | panel failure | N/m | = | Newtons per meter |
| s | = | substrate failure | ks | = | kilosecond |
| ps | = | panel stain | SS | = | stainless steel |
| c | = | cohesive failure | Pa·s | = | Pascal seconds |
| f | = | failure at facestock | | | |

Example 2 and Control II

A hot-melt pressure-sensitive adhesive was formed by bulk polymerization, and contained 15.7% by weight diethyl fumarate, 78.8% by weight butyl acrylate, 5.5% by weight acrylic acid, and had a glass-transition temperature of -41°C and an entanglement molecular-weight of 28,000. There was established the ability by EB cure to duplicate the characteristics (i.e., glass-transition temperature and calculated entanglement molecular-weight) of an acrylic based solution polymer.

Testing results are shown in Table II. The solution polymer (Control II), after removal of the solvent by drying, had a melt viscosity at 150°C/2 sec$^{-1}$ of 800 Pa·s. The solution polymer was then chemically crosslinked.

### Table II*

### Example 2

| | Example 2A[a] | | Example 2B[b] | |
|---|---|---|---|---|
| | (DEF) | (BA) | (AA) | |
| Monomer System (% by wt) | 15.7 | 78.8 | 5.5 | |
| Melt Viscosity ($150°C/2$ $s^{-1}$; Pa·s) | 40 | | 70 | |
| 180° Peel, N/m | 520 | | 596 | |
| Loop Tack, N/m | 588 | | 600 | |
| Room-Temperature Shear[d], 500g (ks) | 86.4+ | | 86.4+ | |
| 70°C Shear, 500g (ks) | 4.6 | | 6.5 | |

| | Control II[c] |
|---|---|
| Melt Viscosity ($150°C/2$ $s^{-1}$; Pa·s) | 800 |
| 180° Peel, N/m | 580 |
| Loop Tack, N/m | 525 |
| Room-Temperature Shear, 500g (ks) | 86.4+ |
| 70°C Shear, 500g (ks) | 4 |

---

(A)   All testing with 2 mil (0.05 mm) Mylar face material and from stainless steel substrate.

---

a = 2% PETA, 70 kGy, 48 g/m² ct. wt. (coating weight)
b = 2% PETA, 50 kGy, 36 g/m² ct. wt.
c = dried at 70°C, 50 g/m² ct. wt.
+ = greater than
d = at 1.27cm x 1.27cm overlap

Examples 3 and 4 and Controls III and IV

This study was to compare the pressure-sensitive adhesive performance of the invention vs. U.S.-A-4,220,744 as illustrated by its examples. The identification of the Examples and Controls (Examples from the '744 patent) are summarized in Table III. There was used dibutyl fumarate (DBF) and dioctyl fumarate (DOF), instead of diisobutyl fumarate and di-n-octyl fumarate, as the latter are unavailable in the United States. Use of a high level of initiator and no acid, gave very low melt viscosity, e.g., 1 Pa·s polymers. The hot melts of the invention contained acrylic acid and also had a viscosity at least ten times as high, e.g., from 10 to 100 Pa·s at 150°C/2 $s^{-1}$.

Pressure-sensitive-adhesive performance of the Examples and Controls was evaluated after compounding each of them with 2% PETA and 600 ppm, of an anti-oxidant. The compounded hot melts were coated on a release liner at about 50 g/m² coat weight, laminated with a 2-mil (0.05 mm) Mylar, and EB-cured at 200 kv through the Mylar, at various dosages from 10 through 500 kGy. Adhesive properties were tested using stainless-steel panels. The 180° peel adhesion and loop-tack values were measured at 12 in/min.-

(30.5 cm/min.) crosshead speed. Creep resistance at room temperature (or RT shear) was tested with 1/2 x 1/2 in$^2$ (or 1.27cm x 1.27cm) lapping samples with a 1000g load.

Pressure-sensitive-adhesive performance of the hot melts is summarized in Table IV. It is observed in Table IV that the materials made by following the '744 patent had zero cohesive strength (i.e., 0.0 @ 1000 g RTS) and very weak adhesion properties (i.e., 180° peel and loop tack) with a cohesive mode of failure. In comparison, the hot melts of the invention had good adhesion properties with a panel mode of failure and also with good cohesive strength.

Table III

| Description | Fumarate | Component/Composition, by Weight | Wt % Initiator (Vazo 67 [d]) | Viscosity @150°C/2 sec$^{-1}$ |
|---|---|---|---|---|
| Example 3 | DEF | (DEF/BA/AA) 15/80/5 | 0.30 (DDM=0.1%) | 78 Pa.S |
| Example 4 | DEF | (DEF/BA/AA) 20/75/5 | 0.30 (DDM=0.1%) | 52 Pa.S |
| Control III | DBF | (DBF/BA) 10/90 | 2.50 | 0.8 Pa.S |
| Control IV | DOF | (DOF/2-EHA) 12/88 | 1.08 | 1.6 Pa.S |

d = Vazo 67 initiator is similar to AIBN. The chain transfer agent, Dodecyl Mercaptan (DDM), was used here and in the amount indicated.

Table IV

| Adhesive Performance | | | | |
|---|---|---|---|---|
| Description | EB Dosage (kGy) | PSA Performance | | |
| | | 180° Peel (N/m) | Loop Tack (N/m) | 1000 g RTS (ks) |
| Example 3 | 10 | 630 | 630 | 19.0 |
| | 30 | 516 | 533 | -- |
| | 50 | 446 | 534 | 3.4 |
| Example 4 | 10 | 980 | 1068 | 0.1 |
| | 30 | 831 | 884 | 1.4 |
| | 50 | 656 | 893 | 6.5 |
| Control III | 10 | 18 | 88 | 0 |
| | 30 | 48 | 184 | 0 |
| | 50 | 79 | 262 | 0 |
| Control IV | 10 | 44 | 158 | 0 |
| | 30 | 79 | 236 | 0 |
| | 50 | 91 | 245 | 0 |
| N/m = Newtons per meter | | | | |
| ks = kilosecond | | | | |

## Claims

1. A radiation-curable pressure-sensitive adhesive comprising a copolymer formed of:

at least one interpolymerized first monomer having a glass-transition temperature less than -25°C and an entanglement molecular-weight greater than 20,000 and present in an amount of from 55% to 90% by weight based on the total weight of the monomers;

at least one interpolymerized second monomer having a glass-transition temperature greater than -25°C and an entanglement molecular-weight less than 20,000, said second monomer being present in an amount up to 25% by weight based on the total weight of the monomers; and

at least one interpolymerized tackifier monomer having a glass-transition temperature greater than -25°C and an entanglement molecular-weight of at least 20,000, the tackifier monomer being present in an amount of up to 30% by weight, preferably 5 to 30% by weight, of the total monomers present to form an interpolymer having a glass-transition temperature less than -25°C and an entanglement molecular-weight greater than 20,000.

2. A pressure-sensitive adhesive according to claim 1 in which the tackifier monomer comprises a compound selected from lower alkyl diesters of an unsaturated dicarboxylic acid containing 4 carbon atoms in which each alkyl group contains from 1 to 3 carbon atoms, for example diethyl fumarate, acrylic acid esters of branched alcanols, and lower alkyl methacrylates.

3. A pressure-sensitive adhesive according to claim 1 or claim 2, in which the first monomer is selected from the group consisting of 2-ethylhexyl acrylate and butyl acrylate.

4. A pressure-sensitive adhesive according to claim 1, 2 or 3, in which the second monomer is an unsaturated carboxylic acid, for example acrylic acid, and if acrylic acid is chosen, it is for example present in an amount of from 1% to 25% by weight based on the total weight of the monomers.

5. A pressure-sensitive adhesive according to any of claims 1 to 4, which additionally contains up to 8% by weight of the total monomers, of a multifunctional monomer, for example 1 to 5% by weight thereof, said monomer having two or more pendant acrylate or methacrylate groups which enable cross-linking of a cast coating of the adhesive.

6. A pressure-sensitive adhesive according to claim 1 or claim 2, which additionally contains 1% to 5% by weight of the total monomers, of a multifunctional monomer and the first monomer is selected from 2-ethylhexyl acrylate and butyl acrylate.

7. A pressure-sensitive adhesive according to claim 1, wherein the first monomer is an alkyl acrylate selected from 2-ethylhexyl acrylate and butyl acrylate, the second monomer includes acrylic acid and the tackifier monomer includes diethyl fumarate.

8. A pressure-sensitive adhesive according to claim 7, which additionally contains up to 8% by weight of the total monomers, of an interpolymerized multifunctional monomer as defined in Claim 5, for example 1 to 5% by weight thereof.

9. A pressure-sensitive adhesive according to any of claims 1 to 6 or to claim 8, in which the multifunctional monomer is selected from pentaerythritol triacrylate, tetraethyleneglycol dimethacrylate, and trimethylol propane trimethacrylate.

10. A pressure-sensitive adhesive according to any of claims 1 to 6 or to claim 7, 8 or 9, in which the adhesive is in layer form and is radiation-cured, for example is in layer form applied as a hot-melt, and is electron-beam cured.

11. A radiation-cured pressure-sensitive adhesive layer produced from the adhesive according to claim 1, wherein the first monomer includes an alkyl acrylate selected from 2-ethylhexyl acrylate and butyl acrylate, the second monomer includes acrylic acid, and the tackifier monomer includes diethyl fumarate, the adhesive further including a multifunctional monomer as defined in claim 5, present in an amount of up to 8% by weight of the total monomers, for example from 1% to 5% by weight of the total monomers.

12. A pressure-sensitive adhesive according to claim 11, in which the multifunctional monomer is selected from pantaerythritol triacrylate, tetraethyleneglycol dimethacrylate, and trimethylol propane trimethacrylate.

13. A process for the production of a pressure-sensitive adhesive stock, which process comprises:
   a) providing onto a substrate selected from a face material and a surface capable of transferring an adhesive layer to a face material, a coating of a pressure-sensitive adhesive (e.g a hot melt adhesive) comprised of an interpolymer formed of:
      at least one first monomer having a glass-transition temperature less than -25°C and an entanglement molecular-weight greater than 20,000 and present in an amount of from 55% to 90% by weight based on the total weight of the monomers;

at least one second monomer having a glass-transition temperature greater than -25°C and an entanglement molecular-weight less than 20,000, said second monomer being present in an amount of up to 25% by weight based on the total weight of the monomers; and

at least one tackifier monomer having a glass-transition temperature greater -25°C and an entanglement molecular-weight of at least 20,000, said tackifier monomer being present in an amount of up to 30% by weight, preferably 5 to 30% by weight, of the total monmers present to provide a hot-melt adhesive having a glass-transition temperature less than -25°C and an entanglement molecular-weight greater than 20,000; and

b) subjecting the pressure-sensitive-adhesive layer to the action of radiation-energy crosslinking, to cause an increase in shear strength of the interpolymer.

14. A process according to claim 13 in which the pressure-sensitive adhesive is applied as a hot melt and is electron-beam cured either on the transfer surface prior to contact with the face material or when the pressure-sensitive adhesive is in contact with the face material.

15. A process according to claim 13 or claim 14, in which the tackifier monomer is selected from the lower alkyl diesters of an unsaturated dicarboxylic acid containing 4 carbon atoms in which each alkyl group contains from 1 to 3 carbon atoms, for example diethyl fumarate, and acrylic acid esters of branched alcanols.

16. A process as claimed in claim 13, 14 or 15, in which the first monomer is selected from 2-ethylhexyl acrylate and butyl acrylate.

17. A process according to claim 13, 14, 15 or 16, in which the second monomer comprises an unsaturated carboxylic acid, for example acrylic acid, and if acrylic acid is chosen, it is for example present in an amount of from 1% to 25% by weight based on the total weight of the monomers.

18. A process according to any of claims 13 to 17, in which there is present in the pressure-sensitive adhesive, when subject to cure, a multifunctional monomer in an amount of up to 8% by weight of the total monomers of the adhesive, for example 1 to 5% by weight.

19. A process according to any of claims 13 to 18, wherein step (b) is performed using electron beam radiation to cause cross-linking.

20. A process according to claim 19, wherein the first monomer includes an alkyl acrylate selected from the group consisting of 2-ethylhexyl acrylate and butyl acrylate; said second monomer includes acrylic acid and is present in an amount of up to 25%, for example up to 20% by weight based on the total weight of the monomers; the tackifier monomer includes diethyl fumarate, and the adhesive further comprises at least one multifunctional cross-linking monomer as defined in claim 5 present in an amount up to 8% by weight, for example 1 to 5% by weight based on the total weight of the monomers; the process involving subjecting the pressure-sensitive-adhesive layer to the action of electron-beam radiation to cause cross-linking, said electron-beam radiation being provided in an amount up to a level of 200 kiloGray and sufficient to cause an increase in shear strength of the interpolymer.

21. A process according to claim 20, in which the pressure-sensitive adhesive is electron-beam cured prior to contact with the face material, or when in contact with the face material.

22. A pressure-sensitive adhesive according to claim 18, 19, 20 or 21, in which the multifunctional monomer is selected from pentaerythritol triacrylate, tetraethyleneglycol dimethacrylate, and trimethylol propane trimethacrylate.

**Patentansprüche**

1. Ein durch Strahlung härtbarer druckempfindlicher Klebstoff, der ein Copolymer umfaßt, das aus: wenigstens einem interpolymerisierten ersten Monomer mit einer Glasübergangstemperatur von weniger als -25° C und einem Verknäuelungs-Molekulargewicht, das größer als 20 000 ist, und das in einer Menge von 55 bis 90 Gew.-%, bezogen auf das Gesamtgewicht der Monomeren, vorhanden ist; wenigstens einem interpolymerisierten zweiten Monomer mit einer Glasübergangstemperatur, die höher als -25° C ist, und einem Verknäuelungs-Molekulargewicht, das niedriger als 20 000 ist, wobei dieses zweite Monomer in einer Menge von bis zu 25 Gew.-%, bezogen auf das gesamte Gewicht der Monomeren, vorhanden ist; und wenigstens einem interpolymerisierten Klebrigmacher-Monomeren mit einer Glasübergangstemperatur, die höher als -25° C ist, und einem Verknäuelungs-Molekulargewicht von wenigstens 20 000, wobei das Klebrigmacher-Monomer in einer Menge von bis zu 30 Gew.-%, vorzugsweise 5 bis 30 Gew.-%, der gesamten vorhandenen Monomeren vorhanden ist, um ein Interpolymer mit einer Glasübergangstemperatur, die kleiner als -25° C ist, und einem Verknäuelungs-Molekulargewicht, das höher als 20 000 ist, zu bilden, gebildet ist.

2. Ein druckempfindlicher Klebstoff nach Anspruch 1, bei dem das Klebrigmacher-Monomer eine Verbindung umfaßt, die aus niedrigen Alkyldiestern von einer ungesättigten Dicarbonsäure, die 4 Kohlenstoffatome enthält, in denen jede Alkylgruppe 1 bis 3 Kohlenstoffatome enthält, z. B. Diethylfumarat, Acrylsäureestern von verzweigten Alcanolen und niedrigen Alkylmethacrylaten, ausgewählt ist.

3. Ein druckempfindlicher Klebstoff nach Anspruch 1 oder Anspruch 2, bei dem das erste Monomer aus der Gruppe ausgewählt ist, die aus 2-Ethylhexylacrylat und Butylacrylat besteht.

4. Ein druckempfindlicher Klebstoff nach Anspruch 1, 2 oder 3, bei dem das zweite Monomer eine ungesättigte Carbonsäure, z. B. Acrylsäure, ist und, wenn Acrylsäure gewählt wird, z. B. in einer Menge von 1 bis 25 Gew.-%, bezogen auf das gesamte Gewicht der Monomeren, vorhanden ist.

5. Ein druckempfindlicher Klebstoff nach einem der Ansprüche 1 bis 4, der zusätzlich bis zu 8 Gew.-% der gesamten Monomeren von einem multifunktionellen Monomer, z. B. 1 bis 5 Gew.-% derselben, enthält, wobei dieses Monomer 2 oder mehr hängende Acrylat- oder Methacrylatgruppen hat, die Vernetzung eines gegossenen Überzugs aus dem Klebstoff ermöglichen.

6. Ein druckempfindlicher Klebstoff nach Anspruch 1 oder Anspruch 2, der zusätzlich 1 bis 5 Gew.-% der gesamten Monomeren von einem multifunktionellen Monomer enthält und bei dem das erste Monomer aus 2-Ethylhexylacrylat und Butylacrylat ausgewählt ist.

7. Ein druckempfindlicher Klebstoff nach Anspruch 1, bei dem das erste Monomer ein Alkylacrylat ist, das aus 2-Ethylhexylacrylat und Butylacrylat ausgewählt ist, das zweite Monomer Acrylsäure einschließt und das Klebrigmacher-Monomer Diethylfumarat einschließt.

8. Ein druckempfindlicher Klebstoff nach Anspruch 7, der zusätzlich bis zu 8 Gew.-% der gesamten Monomeren von einem interpolymerisierten multifunktionellen Monomeren, wie es in Anspruch 5 definiert ist, z. B. 1 bis 5 Gew.-% davon, enthält.

9. Ein druckempfindlicher Klebstoff nach einem der Ansprüche 1 bis 6 oder Anspruch 8, bei dem das multifunktionelle Monomer aus Pentaerythritoltriacrylat, Tetraethylenglykoldimethacrylat und Trimethylolpropantrimethacrylat ausgewählt ist.

10. Ein druckempfindlicher Klebstoff nach einem der Ansprüche 1 bis 6 oder Anspruch 7, 8 oder 9, bei dem der Klebstoff in Schichtform vorliegt und durch Strahlung gehärtet ist, z. B. in Schichtform, die als eine heiße Schmelze aufgebracht worden ist und durch Elektronenstrahlen gehärtet ist.

11. Eine durch Strahlung härtbare druckempfindliche Klebmittelschicht, die aus dem Klebstoff nach Anspruch 1 hergestellt ist, bei dem das erste Monomer ein Alkylacrylat umfaßt, das aus 2-Ethylhexylacrylat und Butylacrylat ausgewählt ist, das zweite Monomer Acrylsäure umfaßt und das Klebrigmacher-Monomer Diethylfumarat umfaßt, wobei der Klebstoff weiterhin ein multifunktionelles Monomer, wie es in Anspruch 5 definiert ist, einschließt, das in einer Menge von bis zu 8 Gew.-% von den gesamten Monomeren, z. B. 1 bis 5 Gew.-% aller Monomere, vorhanden ist.

**12.** Ein druckempfindlicher Klebstoff nach Anspruch 11, bei dem das multifunktionelle Monomer aus Pentaerythritoltriacrylat, Tetraethylenglykoldimethacrylat und Trimethylolpropantrimethacrylat ausgewählt ist.

**13.** Ein Verfahren zur Herstellung eines druckempfindlichen Klebstoffmaterials, das folgendes umfaßt:

a) Vorsehen auf einem Träger, der aus einem Obermaterial und einer Oberfläche, die in der Lage ist, eine Klebmittelschicht auf ein Obermaterial zu übertragen, ausgewählt ist, eine Beschichtung aus einem druckempfindlichen Klebstoff (z.B. einem Heißschmelzklebstoff), der aus einem Interpolymer besteht, das gebildet ist aus:

wenigstens einem ersten Monomer mit einer Glasübergangstemperatur, die kleiner als -25° C ist, und einem Verknäuelungs-Molekulargewicht, das größer als 20 000 ist, und das in einer Menge von 55 - 90 Gew.-%, bezogen auf das Gesamtgewicht der Monomeren,vorhanden ist;

wenigstens einem zweiten Monomer mit einer Glasübergangstemperatur, die größer als -25° C ist, und einem Verknäuelungs-Molekulargewicht, das kleiner als 20 000 ist, wobei dieses zweite Monomer in einer Menge von bis zu 25 Gew.-%, bezogen auf das Gesamtgewicht der Monomeren, vorhanden ist; und

wenigstens einem Klebrigmacher-Monomer mit einer Glasübergangstemperatur, die größer als -25° C ist, und einem Verknäuelungs-Molekulargewicht von wenigstens 20 000, wobei das Klebrigmacher-Monomer in einer Menge von bis zu 30 Gew.-%, vorzugsweise 5 bis 30 Gew.-%, von allen vorhandenen Monomeren vorhanden ist, um einen Heißschmelz-Klebstoff mit einer Glasübergangstemperatur von weniger als -25° C und einem Verknäuelungs-Molekulargewicht, das grösser als 20 000 ist, zu bilden, und

b) Unterwerfen der druckempfindlichen Klebmittelschicht der Vernetzungswirkung durch Strahlungsenergie, um eine Erhöhung der Scherfestigkeit des Interpolymeren zu bewirken.

**14.** Ein Verfahren nach Anspruch 13, bei dem der druckempfindliche Klebstoff als eine heiße Schmelze aufgebracht wird und durch Elektronenstrahlen gehärtet wird entweder auf der Übertragungsoberfläche vor dem Kontakt mit dem Obermaterial oder wenn der druckempfindliche Klebstoff mit dem Obermaterial in Kontakt steht.

**15.** Ein Verfahren nach Anspruch 13 oder 14, bei dem das Klebrigmacher-Monomer aus niederen Alkyldiestern von einer ungesättigten Dicarbonsäure, die 4 Kohlenstoffatome enthält, in denen jede Alkylgruppe 1 bis 3 Kohlenstoffatome enthält, z. B. Diethylfumarat, und Acrylsäureestern von verzweigten Alcanolen ausgewählt ist.

**16.** Ein Verfahren nach Anspruch 13, 14 oder 15, bei dem das erste Monomer aus 2-Ethylhexylacrylat und Butylacrylat ausgewählt ist.

**17.** Ein Verfahren nach Anspruch 13, 14, 15 oder 16, bei dem das zweite Monomer eine ungesättigte Carbonsäure, z. B. Acrylsäure, umfaßt und, wenn Acrylsäure gewählt wird, beispielsweise in einer Menge von 1 bis 25 Gew.-%, bezogen auf das gesamte Gewicht der Monomeren, vorhanden ist.

**18.** Ein Verfahren nach einem der Ansprüche 13 bis 17, bei dem in dem druckempfindlichen Klebstoff, wenn dieser der Härtung unterworfen wird, ein multifunktionelles Monomer in einer Menge von bis zu 8 Gew.-% der gesamten Monomeren des Klebstoffes, z. B. 1 bis 5 Gew.-%, vorhanden ist.

**19.** Ein Verfahren nach einem der Ansprüche 13 bis 18, bei dem Schritt (b) durchgeführt wird, indem Elektronenstrahlbestrahlung angewendet wird, um Vernetzung zu verursachen.

**20.** Ein Verfahren nach Anspruch 19, bei dem das erste Monomer ein Alkylacrylat enthält, das aus der Gruppe ausgewählt ist, die aus 2-Ethylhexylacrylat und Butylacrylat besteht; das zweite Monomer Acrylsäure einschließt und in einer Menge von bis zu 25 Gew.-%, z.B. bis zu 20 Gew.-%, bezogen auf das Gesamtgewicht der Monomeren, vorhanden ist; das Klebrigmacher-Monomer Diethylfumarat einschließt und der Klebstoff weiterhin wenigstens ein multifunktionelles Vernetzungsmonomer, wie es in Anspruch 5 definiert ist, umfaßt, das in einer Menge bis zu 8 Gew.-%, z. B. 1 bis 5 Gew.-%, bezogen auf das Gesamtgewicht der Monomeren, umfaßt; wobei das Verfahren einschließt, daß die druckempfindliche Klebmittelschicht der Einwirkung von Elektronenstrahlbestrahlung unterworfen wird, um Vernetzung zu bewirken, die Elektronenstrahlbestrahlung in einer Stärke vorgesehen wird bis zu einem Niveau von 200 kiloGray und ausreichend ist, um einen Anstieg in der Scherfestigkeit des Interpolymeren zu bewirken.

21. Ein Verfahren nach Anspruch 20, bei dem der druckempfindliche Klebstoff vor dem Kontakt mit dem Obermaterial oder beim Kontakt mit dem Obermaterial durch Elektronenstrahlen gehärtet wird.

22. Ein druckempfindlicher Klebstoff nach Anspruch 18, 19, 20 oder 21, bei dem das multifunktionelle Monomer aus Pentaerythritoltriacrylat, Tetraethylenglykoldimethacrylat und Trimethylolpropantrimethacrylat ausgewählt ist.

**Revendications**

1. Auto-adhésif durcissable par irradiation, comprenant un copolymère formé de:
   au moins un premier monomère en liaison polymère, ayant une température de transition vitreuse inférieure à -25°C et un poids moléculaire à l'état enchevêtré supérieur à 20 000, présent dans une proportion de 55 à 90% en poids sur la base du poids total des monomères;
   au mois un deuxième monomère en liaison polymère, ayant une temperature de transition vitreuse supérieure à -25°C et un poids moléculaire à l'état enchevêtré inférieur à 20 000, ce deuxième monomère étant présent dans une proportion de 25% en poids au maximum sur la base du poids total des monomères; et
   au moins un monomère d'adhésivité en liaison polymère, ayant une température de transition vitreuse supérieure à -25°C et un poids moléculaire à l'état enchevêtré d'au moins 20 000, ce monomère d'adhésivité étant présent dans une proportion de 30% en poids au maximum, de préférence de 5 à 30% en poids des monomères totaux présents, de façon à former un copolymère ayant une température de transition vitreuse inférieure à -25°C et un poids moléculaire à l'état enchevêtré supérieur à 20 000.

2. Auto-adhésif selon la revendication 1, dans lequel le monomère d'adhésivité est constitué par un composé choisi parmi des diesters d'alkyles inférieurs et d'un acide dicarboxylique insaturé à 4 atomes de carbone, chaque groupement alkyle contenant de 1 à 3 atomes de carbone, par exemple le fumarate de diéthyle, des esters d'acide acrylique et d'alcanols ramifiés et des méthacrylates d'alkyles inférieurs.

3. Auto-adhésif selon la revendication 1 ou 2, dans lequel le premier monomère est choisi dans le groupe constitué par l'acrylate de 2-éthylhexyle et l'acrylate de butyle.

4. Auto-adhésif selon l'une quelconque des revendications 1 à 3, dans lequel le deuxième monomère est un acide carboxylique insaturé, par exemple l'acide acrylique, et si l'acide acrylique est choisi, il est par exemple présent dans une proportion de 1% à 25% en poids sur la base du poids total des monomères.

5. Auto-adhésif selon l'une quelconque des revendications 1 à 4, contenant en plus jusqu'à 8% en poids, par rapport au poids total des monomères, d'un monomère multifonctionnel, par exemple 1 à 5% en poids de celui-ci, ce monomère renfermant deux groupements acrylate ou méthacrylate libres ou plus, qui rendent possible la réticulation d'une couche de revêtement coulée de l'adhésif.

6. Auto-adhésif selon la revendication 1 ou 2, contenant en plus 1 à 5% en poids, sur la base du poids total des monomères, d'un monomère multifonctionnel, le premier monomère étant choisi entre l'acrylate de 2-éthylhexyle et l'acrylate de butyle.

7. Auto-adhésif selon la revendication 1, dans lequel le premier monomère est un acrylate d'alkyle choisi entre l'acrylate de 2-éthylhexyle et l'acrylate de butyle, le deuxième monomère contient de l'acide acrylique et le monomère d'adhésivité contient du fumarate de diéthyle.

8. Auto-adhésif selon la revendication 7, contenant en plus jusqu'a 8% en poids, sur la base du poids total des monomères, d'un monomère multifonctionnel tel que défini dans la revendication 5 en liaison polymère, par exemple 1 à 5% en poids de celui-ci.

**9.** Auto-adhésif selon l'une quelconque des revendications 1 à 6 ou 8, dans lequel le monomère multifonctionnel est choisi parmi le triacrylate de pentaérythritol, le diméthacrylate de tétraéthylèneglycol et le triméthacrylate de triméthylolpropane.

**10.** Auto-adhésif selon l'une quelconque des revendications 1 à 6 et 7, 8 ou 9, dans lequel l'adhésif est sous forme de couche et est durci par irradiation, par exemple sous la forme d'une couche qui est appliquée à l'état de masse fondue à chaud et qui est durcie par faisceau électronique.

**11.** Couche d'auto-adhésif durcie par irradiation, produite à partir de l'adhésif selon la revendication 1, dans lequel le premier monomère contient un acrylate d'alkyle choisi entre l'acrylate de 2-éthylhexyle et l'acrylate de butyle, le deuxième monomère contient de l'acide acrylique et le monomère d'adhésivité contient du fumarate de diéthyle, l'adhésif contenant en outre un monomère multifonctionnel tel que défini dans la revedication 5, présent dans une proportion de 8% en poids au maximum, par exemple de 1% à 5% en poids, sur la base du poids total des monomères.

**12.** Auto-adhésif selon la revendication 11, dans lequel le monomère multifonctionnel est choisi parmi le triacrylate de pentaérythritol, le diméthacrylate de tétraéthylèneglycol et le triméthacrylate de triméthylolpropane.

**13.** Procédé de fabrication d'un matériau auto-adhésif, comprenant les étapes consistant
  a) à former, sur un substrat choisi entre un matériau en nappe et une surface capable de transférer une couche d'adhésif sur un matériau en nappe, une couche de revêtement d'un auto-adhésif (par exemple un adhésif fondu à chaud) comprenant un copolymère formé de
    au moins un premier monomère ayant une température de transition vitreuse inférieure à -25°C et un poids moléculaire à l'état enchevêtré supérieur à 20 000, présent dans une proportion de 55 à 90% en poids sur la base du poids total des monomères;
    au moins un deuxième monomère ayant une température de transition vitreuse supérieure à -25°C et un poids moléculaire à l'état enchevêtré inférieur à 20 000, ce deuxième monomère étant présent dans une proportion de 25% en poids au maximum sur la base du poids total des monomères; et
    au moins un monomère d'adhésivité ayant une température de transition vitreuse supérieure à -25°C et un poids moléculaire à l'état enchevêtré d'au moins 20 000, ce monomère d'adhésivité étant présent dans une proportion de 30% en poids au maximum, de préférence de 5 à 30% en poids des monomères totaux présents, de façon à former un adhésif fondu à chaud ayant une température de transition vitreuse inférieure à -25°C et un poids moléculaire à l'état enchevêtré supérieur à 20 000; et
  b) à soumettre la couche d'auto-adhésif à un traitement de réticulation par énergie de radiation, afin de produire une élévation de la résistance au cisaillement du copolymère.

**14.** Procédé selon la revendication 13, dans lequel l'auto-adhésif est appliqué sous forme de masse fondue à chaud et est durci par un faisceau électronique, soit sur la surface de transfert avant sa mise en contact avec le matériau en nappe, soit lorsque l'auto-adhésif est en contact avec le matériau en nappe.

**15.** Procédé selon la revendication 13 ou 14, dans lequel le monomère d'adhésivité est choisi parmi les diesters d'alkyles inférieurs et d'un acide dicarboxylique insaturé à 4 atomes de carbone, chaque groupement alkyle contenant de 1 à 3 atomes de carbone, par exemple le fumarate de diéthyle et des esters d'acide acrylique et d'alcanols ramifiés.

**16.** Procédé selon l'une quelconque des revendications 13 à 15, dans lequel le premier monomère est choisi entre l'acrylate de 2-éthylhexyle et l'acrylate de butyle.

**17.** Procédé selon l'une quelconque des revendications 13 à 16, dans lequel le deuxième monomère est un acide carboxylique insaturé, par exemple l'acide acrylique, et si l'acide acrylique est choisi, il est par exemple présent dans une proportion de 1% à 25% en poids sur la base du poids total des monomères.

18. Procédé selon l'une quelconque des revendications 13 à 17, dans lequel il est présent dans l'auto-adhésif, lorsque celui-ci est soumis au durcissement, un monomère multifonctionnel dans une proportion allant jusqu'à 8% en poids des monomères totaux de l'adhésif, par exemple de 1 à 5% en poids.

19. Procédé selon l'une quelconque des revendications 13 à 18, dans lequel l'étape (b) est exécutée avec utilisation d'un faisceau électronique d'irradiation pour provoquer la réticulation.

20. Procédé selon la revendication 19, dans lequel le premier monomère contient un acrylate d'alkyle choisi dans le groupe constitué par l'acrylate de 2-éthylhexyle et l'acrylate de butyle; le deuxième monomère contient de l'acide acrylique et est présent dans une proportion de 25% au maximum, par exemple de 20% en poids au maximum sur la base du poids total des monomères; le monomère d'adhésivité contient du fumarate de diéthyle; et l'adhésif comprend en outre au moins un monomère multifonctionnel de réticulation tel que défini dans la revendication 5, présent dans une proportion de 8% en poids au maximum, par exemple de 1 à 5% en poids sur la base du poids total des monomères; le procédé comprenant l'opération consistant à soumettre la couche d'auto-adhésif à l'action d'un faisceau électronique d'irradiation pour causer sa réticulation, cette irradiation par faisceau électronique étant effectuée dans une mesure allant jusqu'à une dose de 200 kGy et suffisante pour produire une élévation de la résistance au cisaillement du copolymère.

21. Procédé selon la revendication 20, dans lequel l'auto-adhésif est durci par faisceau électronique avant d'être mis en contact avec le matériau en nappe ou lorsqu'il est en contact avec le matériau en nappe.

22. Auto-adhésif selon l'une quelconque des revendications 18 à 21, dans lequel le monomère multifonctionnel est choisi parmi le triacrylate de pentaérythritol, le diméthacrylate de tétraéthylèneglycol et le triméthacrylate de triméthylolpropane.

FIG-1

FIG-2

FIG-3

2% BY WGT PETA

FAILURE MODE - PANEL

FIG-4

2% BY WGT PETA

FAILURE MODE - PANEL

>86.4 ks

FIG - 5

FIG - 6